# FASCICULE DE BREVET EUROPEEN

(11) **EP 2 590 849 B1**
(45) Date de publication et mention de la délivrance du brevet: **23.01.2019**
(21) Numéro de dépôt: 11743302.9
(22) Date de dépôt: 06.07.2011
(51) Int. Cl.: B62B 3/10, B62B 3/14

(54) **CHARIOT D'ACHATS**
EINKAUFSWAGEN
SHOPPING TROLLEY

(30) Priorité: 06.07.2010 FR 1055481
(43) Date de publication de la demande: 15.05.2013
(73) Titulaire: Les Ateliers Réunis - Caddie, 67410 Drusenheim (FR)
(72) Inventeur: JOSEPH, Alice, F-67301 Schiltigheim Cedex (FR); LE MARCHAND, Alain, F-67116 Reichstett (FR)
(74) Mandataire: Laget, Jean-Loup
(86) Numéro de dépôt international: PCT/FR2011/051604
(87) Numéro de publication internationale: WO 2012/004529

(56) Documents cités:
- EP-A2- 0 202 135
- DE-U1- 29 820 906
- FR-A2- 2 578 216
- US-A1- 2006 145 437
- US-A1- 2007 096 437
- US-B1- 7 566 069

## Description

L'invention concerne les chariots d'achats que les magasins à grande surface mettent à la disposition de leurs clients pour faire leurs emplettes. Le genre de chariots actuellement le plus répandu est constitué d'un socle roulant sur lequel une corbeille est montée fixe, ce qui oblige l'acheteur à effectuer un transvasement des marchandises de la corbeille du chariot dans le coffre de sa voiture.

Il a également été proposé diverses solutions d'accrochage sur un socle roulant de sacs ou corbeilles qui sont la propriété de l'acheteur et qui en raison de cette amovibilité suppriment ce transvasement. Un exemple de solution de ce type est la demande de brevet EP 0 202 135 A2 qui décrit un chariot dont le socle roulant porte en partie supérieure des manchons tubulaires fendus dans lesquels on vient engager les extrémités de baguettes rigides formant les poignées de sacs parallélépipédiques.

Cette demande de brevet décrit un chariot selon le préambule de la revendication 1. Cependant ces systèmes de chariots d'achats à sacs amovibles n'ont connu qu'une diffusion relativement faible, essentiellement en raison de leur contenance limitée. En effet, du fait que les sacs sont maintenus en porte-à-faux dans les manchons, il n'est pas possible avec le système décrit dans la demande de brevet EP 0 202 135 A2 d'équiper les socles roulants de sacs procurant une capacité d'achats comparable à celle des paniers fixes des chariots généralement mis à la disposition des clients dans les magasins à grande surface, qui est de l'ordre de 200 à 230 litres.

L'invention vise à procurer un chariot d'achats du type à sacs amovibles qui procure une grande contenance d'achats tout en restant emboitable et léger et dans lequel les opérations de mise en place et d'enlèvement des sacs par l'utilisateur s'effectuent de manière très simple et quasi intuitive.

Dans ce but, l'invention est constituée par un chariot d'achats du type comportant un châssis équipé de roulettes disposées aux extrémités de longerons inférieurs reliés entre eux par au moins une traverse inférieure de manière à définir un quadrilatère en forme de pyramide tronquée dont le petit côté est dirigé vers l'avant, lesdits longerons inférieurs se raccordant à l'opposé dudit petit côté à des montants dont les extrémités supérieures forment un brancard de manoeuvre et ledit châssis étant muni de moyens de support pour des sacs amovibles caractérisé en ce que lesdits moyens de support sont constitués par un arbre longitudinal supérieur s'étendant avec une légère pente entre les montants arrière et l'extrémité avant du châssis sensiblement au niveau du brancard de manoeuvre, ledit arbre portant à chacune de ses extrémités une traverse horizontale supérieure et en ce que ledit arbre et/ou lesdites traverses supérieures coopèrent avec des moyens d'accrochage agencés sur des sacs amovibles.

La combinaison d'une structure de châssis en forme de pyramide tronquée avec un arbre de support des sacs légèrement penté procure l'emboîtabilité des chariots les uns dans les autres sans frottement ni coincement lorsque les sacs sont enlevés, l'arbre longitudinal supérieur formant un portique avec le châssis renforce considérablement sa résistance et lui permet de supporter de lourdes charges tout en restant de construction très simple. Cet arbre permet une mise en place et un enlèvement des sacs par simple dépose de l'ouverture des sacs sur la périphérie des alvéoles de réception définies par l'arbre et ses traverses.

Selon un mode de réalisation avantageux, l'arbre longitudinal supérieur est monté à rotation autour d'un axe horizontal disposé à l'avant du châssis, et sa traverse supérieure dirigée vers le brancard de manoeuvre vient en position de service en appui contre des moyens de butée solidaires des montants arrières.

Selon un mode alternatif de réalisation, l'axe de rotation de l'arbre longitudinal supérieur est disposé à proximité immédiate de la partie avant basse du chariot et l'arbre longitudinal est relié au dit axe de rotation par une pièce sensiblement verticale.

Selon encore un autre mode alternatif de réalisation, les longerons inférieurs du châssis se prolongent au niveau de la partie avant par des montants sensiblement verticaux jusqu'à un niveau légèrement inférieur à celui du brancard de manoeuvre et l'axe de rotation de l'arbre longitudinal supérieur est disposé entre les extrémités supérieures desdits montants.

L'invention est en outre remarquable par les caractéristiques ci-après :
- l'arbre longitudinal supérieur comporte au moins deux barrettes disposées parallèlement à la traverse supérieure avant et à la traverse supérieure arrière, lesdites barrettes formant avec lesdites traverses supérieures avant et arrière des plans de support pour des baguettes rigides disposées le long de l'ouverture de sacs amovibles;
- les barrettes, la traverse supérieure avant et à la traverse supérieure arrière sont munies de taquets de calage des extrémités des baguettes;
- l'arbre longitudinal supérieur porte sur sa face supérieure des arceaux destinés à coopérer avec des bandes d'accrochage disposées le long de l'ouverture de sacs amovibles;
- la traverse supérieure avant, la traverse supérieure arrière et/ou les barrettes sont conformées pour coopérer avec des crochets disposés le long de l'ouverture de sacs amovibles.

D'autres caractéristiques et avantages de l'invention ressortiront de la description qui va suivre d'exemples de réalisation non limitatifs de l'invention, en référence aux dessins annexés dans lesquels :
- La Figure 1 est une vue générale en perspective de l'avant d'un premier mode de réalisation d'un chariot d'achats conforme à l'invention;
- La Figure 2 est une vue générale en perspective de l'arrière illustrant l'emboîtement d'une file de chariots selon la Figure 1;
- La Figure 3 est une vue générale en perspective de l'arrière du chariot de la Figure 1 muni de sacs amovibles ;
- La Figure 4a est une vue analogue à celle de la Figure 1 illustrant un mode particulier de réalisation des moyens d'accrochage des sacs amovibles;
- La Figure 4b est une vue partielle de détail illustrant l'accrochage d'un sac sur le chariot de la Figure 4a;
- La Figure 5 est une vue analogue à celle de la Figure 1 illustrant un mode particulier de réalisation d'alvéoles de réception des sacs amovibles;
- La Figure 6 illustre un mode alternatif de réalisation du chariot représenté sur la figure 5;
- La Figure 7 est une vue générale en perspective de l'arrière d'un second mode de réalisation d'un chariot d'achats conforme à l'invention;
- La Figure 8 est une vue générale en perspective de l'arrière illustrant l'emboîtement d'une file de chariots selon la Figure 7.

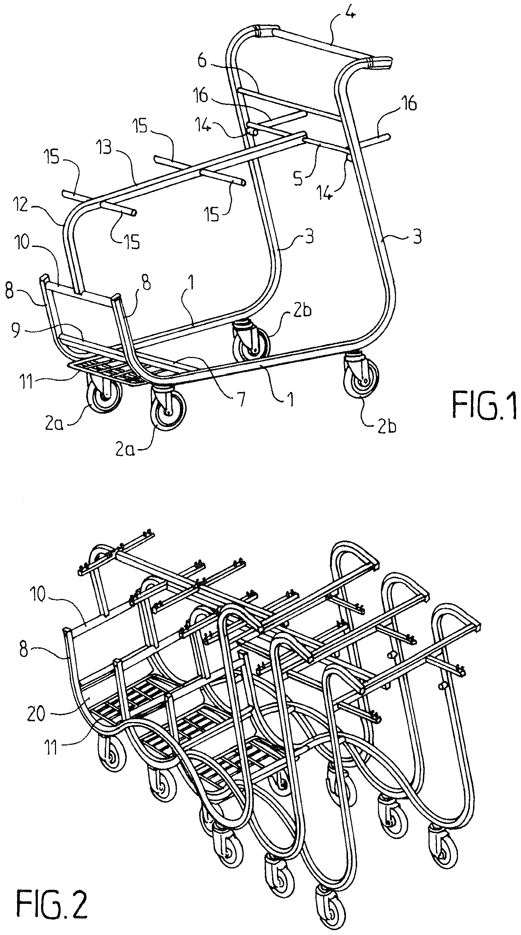

Le chariot représenté sur la Figure 1 comporte un châssis constitué de longerons inférieurs 1 auxquels sont fixées quatre roulettes 2a, 2b qui peuvent être fixes ou directionnelles. Les longerons 1 se raccordent à leur partie arrière à deux montants 3 sensiblement verticaux. L'extrémité supérieure des montants 3 est recourbée vers l'arrière et forme avec une barre 4 un brancard de manoeuvre. Les longerons inférieurs 1 et les montants 3 sont reliés entre eux par les traverses 6 et 7 de manière à définir le gabarit d'un parallélépipède en forme de pyramide tronquée dont le petit côté est dirigé vers l'avant. Au niveau des roulettes avant 2a, les longerons inférieurs 1 se prolongent par deux montants sensiblement verticaux 8, de hauteur moindre que les montants arrière 3. Les montants 8 sont reliés par une traverse inférieure 9 et une traverse supérieure 10. En avant de la traverse 7 qui relie les longerons inférieurs 1, au niveau desdits longerons, est fixé un plan de support 11, qui dans cet exemple est réalisé sous forme d'une grille, et qui s'étend vers l'avant jusqu'au niveau du plan vertical délimité par les montants avant 8.

La traverse 10 porte une pièce de liaison coudée 12 à laquelle se raccorde une barre longitudinale supérieure 13 dirigée vers l'arrière et dont l'extrémité libre est fixée à une traverse 5 qui repose sur des butées 14 portées par les faces internes des montants 3. La traverse 10 est montée à rotation sur les montants 8 de sorte que la barre longitudinale 13 peut être soulevée au-dessus des butées 14. Les dimensions des montants avant 8 et de la pièce coudée 12 sont fixées de telle sorte qu'en position de repos sur les butées 14, qui correspond à la position d'utilisation du chariot, le plan de la barre longitudinale 13 soit légèrement incliné vers le bas et vers l'avant. En pratique l'angle d'inclinaison de la barre 13 est de l'ordre de 5 à 15 degrés.

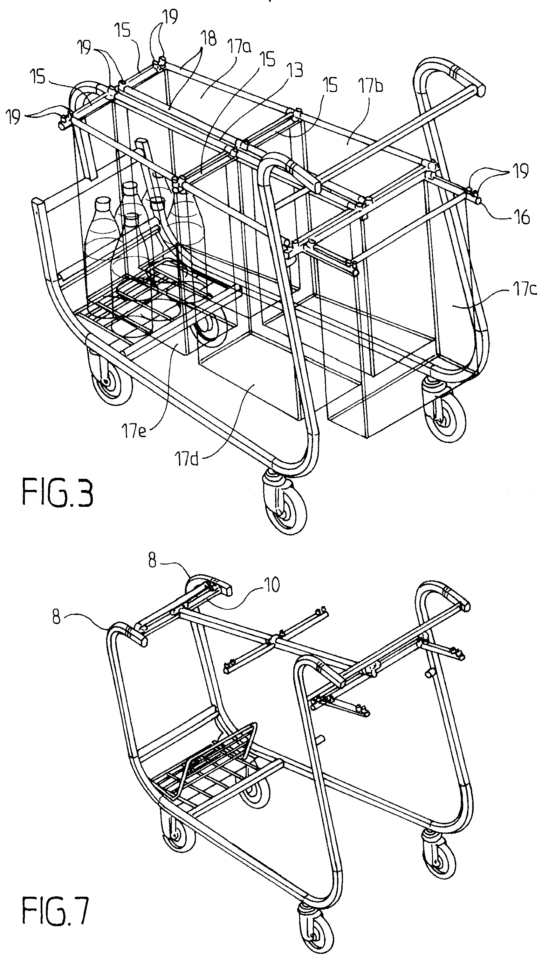

La barre 13 porte deux séries de barrettes transversales 15, la première disposée à proximité de l'avant du chariot, la seconde disposée au milieu de la longueur de la barre 13. La traverse 5 et les barrettes 15 délimitent avec la barre 13 quatre alvéoles ouvertes destinées à recevoir des sacs amovibles dont les moyens d'accrochage coopèrent avec les barrettes 15 la traverse 5 et, éventuellement la barre 13. La traverse 5 porte également deux barrettes additionnelles 16 dirigées vers l'arrière pour recevoir un cinquième sac amovible. La Figure 3 présente, vu en perspective de l'arrière un chariot selon la Figure 1 aves ses sacs amovibles 17a - 17e en position de service.

Les sacs 17a - 17b sont par exemple des contenants réalisés dans une matière souple de manière à pouvoir être repliés sur eux-mêmes afin d'occuper une place réduite lorsqu'ils ne sont pas utilisés. Pour pouvoir être mis en place sur le chariot selon l'invention et en être retirés, ils comportent au niveau de leur ouverture supérieure des moyens d'accrochage sur la barre 13 et /ou les barrettes 15, 16 et la traverse 5.

Dans cet exemple de réalisation, les sacs 17a -17e comportent au niveau de leur ouverture supérieure deux baguettes parallèles 18 dont les extrémités libres font saillie au-delà du sac et reposent en service entre des taquets 19 fixés sur les barrettes 15, 16 et la traverse 5.

Selon un mode de réalisation alternatif non représenté, l'ouverture des sacs est équipée de crochets plats destinés à coopérer avec les barrettes 15, 16, la traverse 5 et /ou la barre 13.

On voit sur la Figure 3 que la grille 11 peut recevoir des objets relativement hauts et lourds, tels que des bouteilles.

L'articulation de la barre 13 permet à celle-ci de se soulever légèrement lors de l'emboîtement des chariots entre eux, comme on le voit sur la figure 2. Les traverses 5 ne sont alors plus en appui sur les butées 14. Cette disposition facilite l'emboîtement des chariots entre eux. Cependant l'invention n'est pas limitée à cette forme de réalisation. En variante la barre 13 peut-être montée fixe sur les montants avant 8 et arrière 3 du châssis. Comme précédemment indiqué, la combinaison d'une structure de châssis en forme de pyramide tronquée avec un arbre de support des sacs légèrement penté procure l'emboîtabilité des chariots les uns dans les autres sans frottement ni coincement lorsque les sacs sont enlevés. L'arbre 13 forme avec le châssis une structure en portique qui renforce considérablement la résistance de l'ensemble et lui permet de supporter de lourdes charges tout en restant de construction très simple. L'arbre 13 permet une mise en place et un enlèvement des sacs par simple dépose de l'ouverture des sacs sur la périphérie des alvéoles de réception définies par ledit arbre 13, les barrettes 15, 16 et la traverse 5.

La traverse 6, peut également servir de support d'accessoire, tel qu'un siège d'enfant. Les traverses 8 et 10 ont pour fonction secondaire d'empêcher que les produits déposés sur la grille 11 ne basculent vers l'avant.

Sur la Figure 2 on voit qu'en variante on a disposé à l'avant du chariot une plaque de protection 20 entre le bord de la grille 11 et la traverse 8. Dans un mode de réalisation alternatif, cette plaque de protection peut s'étendre jusqu'au niveau de la traverse 10.

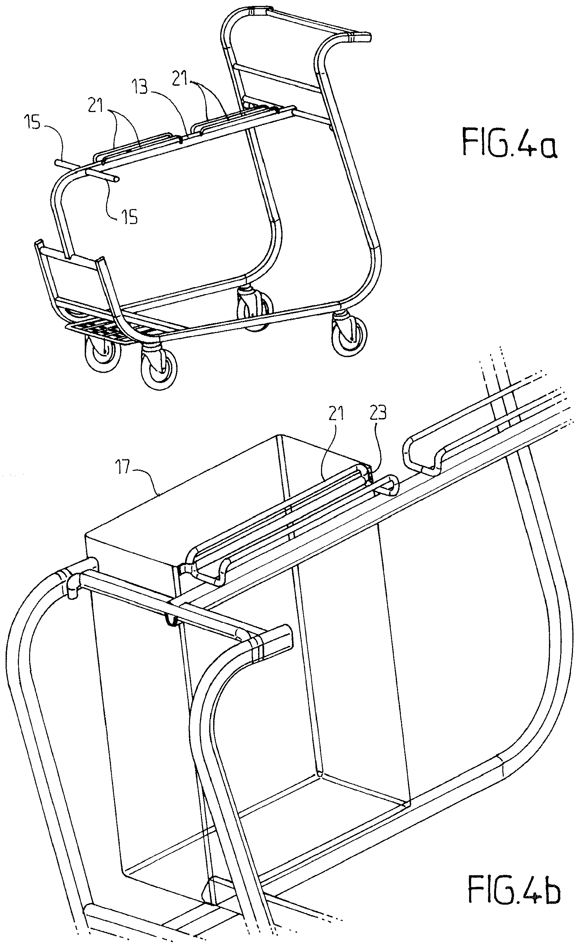

Dans l'exemple de réalisation alternatif représenté sur les Figures 4a et 4b, les barrettes intermédiaires 15 de l'exemple de la Figure 1 ont été remplacées par quatre arceaux 21 fixés sur le dessus de la barre 13. Ces arceaux 21 sont destinés à coopérer avec des bandes d'accrochage 23 disposées le long de l'ouverture de sacs amovibles, comme illustré plus en détail sur la figure 4b.

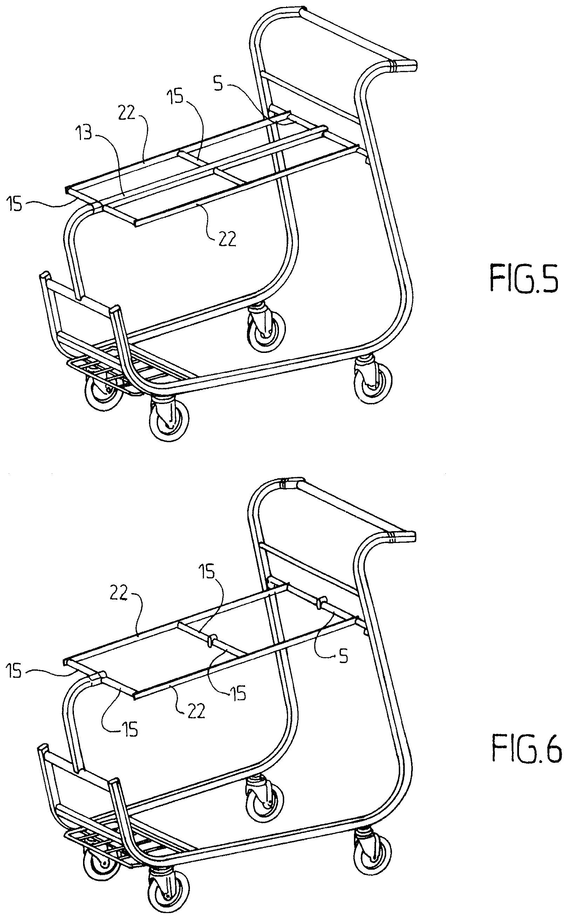

Dans l'exemple de réalisation alternatif représenté sur la Figure 5, les alvéoles définies par la barre 13, les barrettes 15 et la traverse 5 sont fermées par deux barres latérales 22.

La Figure 6 montre un exemple de réalisation dérivé de la Figure 5 avec deux alvéoles au lieu de quatre.

Dans les exemples de réalisation des Figures 1 à 6, l'articulation qui permet à la barre 13 de se soulever légèrement lors de l'emboîtement des chariots est disposée à l'extrémité supérieure des montants avant 8. Selon une autre variante de réalisation non représentée, l'articulation peut être déportée au niveau des longerons 1. Dans un tel cas, la traverse 10 qui porte la pièce de liaison 12 et la barre 13 sera montée fixe sur les montants 8 et ce sont les montants 8 qui seront montés à rotation sur les longerons 1.

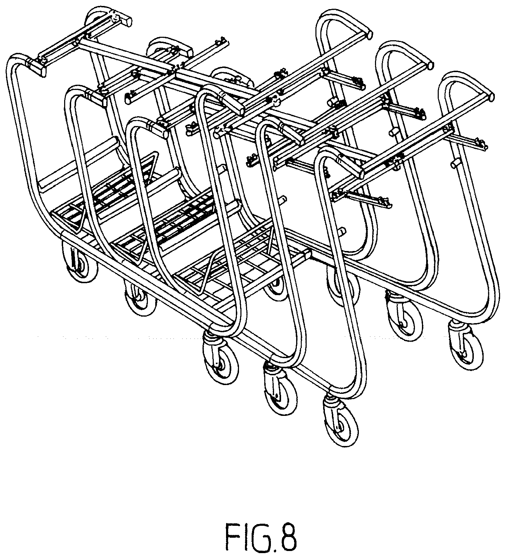

L'exemple de réalisation représenté sur les Figures 7 et 8, le châssis du chariot a une forme générale en berceau, les montants avant 8 étant prolongés en hauteur jusqu'au niveau de l'extrémité avant de la barre 13 qui est directement fixée sur la traverse 10, montée à rotation entre les extrémités supérieures des montants 8 recourbés vers l'arrière.

## Revendications

1. Chariot d'achats du type comportant un châssis équipé de roulettes (2a, 2b) dont le châssis est constitué de longerons inférieurs (1) reliés entre eux par au moins une traverse inférieure (7) de manière à définir un quadrilatère en forme de pyramide tronquée dont le petit côté est dirigé vers l'avant, lesdits longerons inférieurs (1) se raccordant à l'opposé dudit petit côté à des montants (3) dont les extrémités supérieures forment un brancard de manoeuvre et ledit châssis étant muni de moyens de support pour des sacs amovibles **caractérisé en ce que** lesdits moyens de support sont constitués par un arbre longitudinal supérieur (13) s'étendant avec une légère pente entre les montants arrière (3) sensiblement au niveau du brancard de manoeuvre (4) et l'extrémité avant du châssis, ledit arbre (13) portant à chacune de ses extrémités une traverse horizontale supérieure (5, 10) et **en ce que** ledit arbre et/ou lesdites traverses supérieures coopèrent avec des moyens d'accrochage (18) agencés sur des sacs amovibles (17a - 17e).

2. Chariot d'achats selon la revendication 1 **caractérisé en ce que** l'arbre longitudinal supérieur (13) est monté à rotation autour d'un axe horizontal disposé à l'avant du châssis, et **en ce que** sa traverse supérieure (5) dirigée vers le brancard de manoeuvre vient en position de service en appui contre des moyens de butée (14) solidaires des montants arrières (3).

3. Chariot d'achats selon la revendication 2 **caractérisé en ce que** l'axe de rotation de l'arbre longitudinal supérieur (13) est disposé à proximité immédiate de la partie avant basse du chariot et **en ce que** l'arbre longitudinal supérieur (13) est relié au dit axe de rotation par une pièce (12) sensiblement verticale.

4. Chariot d'achats selon la revendication 2 **caractérisé en ce que** les longerons inférieurs (1) du châssis se prolongent au niveau de la partie avant par des montants (8) sensiblement verticaux jusqu'à un niveau légèrement inférieur à celui du brancard de manoeuvre et **en ce que** l'axe de rotation de l'arbre longitudinal supérieur (13) est disposé entre les extrémités supérieures desdits montants.

5. Chariot d'achats selon l'une quelconque des revendications 1 à 4 **caractérisé en ce que** l'arbre longitudinal supérieur (13) comporte au moins deux barrettes (15) disposées parallèlement à la traverse supérieure avant (10) et à la traverse supérieure arrière (5), lesdites barrettes formant avec lesdites traverses supérieures avant et arrière des plans de support pour des baguettes rigides (18) disposées le long de l'ouverture de sacs amovibles.

6. Chariot d'achats selon la revendication 5 **caractérisé en ce que** les barrettes (15), la traverse supérieure avant (10) et à la traverse supérieure arrière (5) sont munies de taquets de calage (19) des extrémités des baguettes (18).

7. Chariot d'achats selon l'une quelconque des revendications 1 à 4 **caractérisé en ce que** l'arbre longitudinal supérieur (13) porte sur sa face supérieure des arceaux (21) destinés à coopérer avec des bandes d'accrochage (23) disposées le long de l'ouverture de sacs amovibles.

8. Chariot d'achats selon l'une quelconque des revendications 5 et 6 **caractérisé en ce que** la traverse supérieure avant (10), la traverse supérieure arrière (5) et ou les barrettes (15) sont conformées pour coopérer avec des crochets disposés le long de l'ouverture de sacs amovibles.

9. Chariot d'achats selon l'une quelconque des revendications 5 et 6 **caractérisé en ce qu'**il comporte au moins un sac amovible comportant au niveau de son ouverture supérieure des moyens d'accrochage sur l'arbre longitudinal supérieur (13) et /ou les barrettes (15, 16) et la traverse horizontale supérieure (5).

10. Chariot d'achats selon la revendication 9 **caractérisé en ce que** ledit au moins un sac amovible comporte au niveau de son ouverture supérieure deux baguettes parallèles (18) dont les extrémités libres font saillie au-delà du sac et reposent en service entre des taquets (19) fixés sur les barrettes (15, 16) et la traverse horizontale supérieure (5).

11. Chariot d'achats selon l'une quelconque des revendications 1 à 6 et 8 **caractérisé en ce qu'**il comporte au moins un sac amovible comportant au niveau de son ouverture supérieure des bandes d'accrochage (23) destinées à coopérer en service avec quatre arceaux (21) fixés sur une face supérieure de l'arbre longitudinal supérieur (13).

12. Chariot d'achats selon l'une quelconque des revendications 5 et 6 **caractérisé en ce qu'**il comporte au moins un sac amovible comportant au niveau de son ouverture supérieure des crochets plats destinés à coopérer avec les barrettes (15, 16), la traverse horizontale supérieure (5) et /ou l'arbre longitudinal supérieur (13).

## Patentansprüche

1. Einkaufswagen der Bauart, umfassend ein mit Rädern (2a, 2b) ausgestattetes Gestell, wobei das Gestell aus unteren Längsträgern (1) gebildet ist, die zwischen sich mit Hilfe von mindestens einem unteren Querträger (7) derart verbunden sind, dass ein Viereck in Form einer kegelstumpfförmigen Pyramide gebildet wird, deren kleine Seite nach vorn zeigt, wobei sich die unteren Längsträger (1) gegenüber der kleinen Seite an Streben (3) anschließen, deren obere Enden einen Manövriergriff bilden und das Gestell mit Trägermitteln für abnehmbare Beutel ausgestattet ist, **dadurch gekennzeichnet, dass** die Trägermittel von einer oberen länglichen Achse (13) gebildet sind, die sich mit einem leichten Gefälle zwischen den hinteren Streben (3) etwa im Bereich der Manövriergriffs (4) und dem vorderen Ende des Gestells erstreckt, wobei die Achse (13) an jedem ihrer Enden einen oberen horizontalen Querträger (5, 10) trägt und dass die Achse und/oder die oberen Querträger mit Kopplungsmitteln (18) zusammenwirken, die über abnehmbaren Beuteln (17a - 17e) ausgebildet sind.

2. Einkaufswagen nach Anspruch 1, **dadurch gekennzeichnet, dass** die obere Längsachse (13) rotierend um eine horizontale Achse, die vorn am Gestell angeordnet ist, montiert ist, und dass sich sein oberer Querträger (5), der in Richtung des Manövriergriffs zeigt, in Serviceposition auf Anschlagmitteln (14) abstützt, die mit den hinteren Streben (3) fest verbunden sind.

3. Einkaufswagen nach Anspruch 2, **dadurch gekennzeichnet, dass** die Rotationsachse der oberen Längsachse (13) in unmittelbarer Nähe des unteren vorderen Abschnitts des Wagens angeordnet ist und dass die obere Längsachse (13) mit der Rotationsachse mittels eines etwa vertikalen Teils (12) verbunden ist.

4. Einkaufswagen nach Anspruch 2, **dadurch gekennzeichnet, dass** sich die unteren Längsträger (1) des Gestells im Bereich des unteren vorderen Abschnitts mittels etwa vertikaler Streben (8) bis zu einer Ebene verlängern, die etwas unter der des Manövriergriffs ist und dass die Rotationsachse der obere Längsachse (13) zwischen den oberen Enden der Streben angeordnet ist.

5. Einkaufswagen nach einem der Ansprüche 1 bis 4, **dadurch gekennzeichnet, dass** die obere Längsachse (13) mindestens zwei Stäbe (15) aufweist, die parallel zum vorderen oberen Querträger (10) und zum hinteren oberen Querträger (5) angeordnet sind, wobei die Stäbe mit dem vorderen und hinteren oberen Querträger Stützebenen für starre Stangen (18) bilden, die entlang der Öffnung der abnehmbaren Beutel angeordnet sind.

6. Einkaufswagen nach Anspruch 5, **dadurch gekennzeichnet, dass** die Stäbe (15), der vordere obere Querträger (10) und der hintere obere Querträger (5) mit Verkeilungsnasen (19) der Enden der Stangen (18) ausgestattet sind.

7. Einkaufswagen nach einem der Ansprüche 1 bis 4, **dadurch gekennzeichnet, dass** die obere Längsachse (13) auf ihrer oberen Fläche Bögen (21) trägt, die bestimmt sind, mit Kopplungsstreifen (23) zusammenzuwirken, die entlang der Öffnung der abnehmbaren Beutel angeordnet sind.

8. Einkaufswagen nach einem der Ansprüche 5 und 6, **dadurch gekennzeichnet, dass** der vordere obere Querträger (10), der hintere obere Querträger (5) und/oder die Stäbe (15) ausgebildet sind, um mit Haken zusammenzuwirken, die entlang der Öffnung der abnehmbaren Beutel angeordnet sind.

9. Einkaufswagen nach einem der Ansprüche 5 und 6, **dadurch gekennzeichnet, dass** er mindestens einen abnehmbaren Beutel aufweist, der im Bereich seiner oberen Öffnung Kopplungsmittel auf der oberen Längsachse (13) und/oder den Stäben (15, 16) und dem oberen horizontalen Querträger (5) aufweist.

10. Einkaufswagen nach Anspruch 9, **dadurch gekennzeichnet, dass** der mindestens eine abnehmbare Beutel im Bereich seiner oberen Öffnung zwei parallele Stangen (18) aufweist, deren freie Enden über den Beutel hinausragen und im Betrieb zwischen Nasen (19) ruhen, die auf den Stäben (15, 16) und dem oberen horizontalen Querträger (5) befestigt sind.

11. Einkaufswagen nach einem der Ansprüche 1 bis 6 und 8, **dadurch gekennzeichnet, dass** er mindestens einen abnehmbaren Beutel aufweist, der im Bereich seiner oberen Öffnung Kopplungsstreifen(23) aufweist, die bestimmt sind, im Betrieb mit vier Bögen (21) zusammenzuarbeiten, die auf einer oberen Fläche der oberen Längsachse (13) befestigt sind.

12. Einkaufswagen nach einem der Ansprüche 5 und 6, **dadurch gekennzeichnet, dass** er mindestens einen abnehmbaren Beutel aufweist, der im Bereich seiner oberen Öffnung flache Haken aufweist, die bestimmt sind, mit den Stäben (15, 16), dem oberen horizontalen Querträger (5) und/oder der oberen Längsachse (13) zusammenzuwirken.

## Claims

1. A shopping cart of the type including a frame provided with casters (2a, 2b), the chassis of which is made up of lower beams (1) connected to one another by at least one lower crosspiece (7) so as to define a quadrilateral in the shape of a truncated pyramid whereof the small side is oriented forward, said lower beams (1) connecting opposite said small side to uprights (3) whereof the upper ends form a maneuvering handle and said chassis being provided with support means for removable bags, **characterized in that** said support means are formed by an upper longitudinal shaft (13) extending with a slight slope between the rear uprights (3) substantially at the maneuvering handle (4) and the front end of the chassis,
said shaft (13) bearing, at each of its ends, an upper horizontal crosspiece (5, 10) and **in that** said shaft and/or said upper crosspieces cooperate with catching means (18) arranged on removable bags (17a-17e).

2. The shopping cart according to claim 1, **characterized in that** the upper longitudinal shaft (13) is mounted rotating around a horizontal axis positioned in front of the chassis, and **in that** its upper crosspiece (5) oriented toward the maneuvering handle comes into the usage position bearing against the stop means (14) secured to the rear uprights (3).

3. The shopping cart according to claim 2, **characterized in that** the rotation axis of the upper longitudinal shaft (13) is positioned in the immediate vicinity of the lower front part of the cart and **in that** the upper longitudinal shaft (13) is connected to said rotation axis by a substantially vertical part (12).

4. The shopping cart according to claim 2, **characterized in that** the lower beams (1) of the chassis extend at the front part by substantially vertical uprights (8) to level slightly lower than that of the maneuvering handle and **in that** the rotation axis of the upper longitudinal shaft (13) is positioned between the upper ends of said uprights.

5. The shopping cart according to any one of claims 1 to 4, **characterized in that** the upper longitudinal shaft (13) includes at least two small bars (15) positioned parallel to the front upper crosspiece (10) and the rear upper crosspiece (5), said small bars forming, with said front and rear upper crosspieces, support planes for rigid rods (18) positioned along the removable bag opening.

6. The shopping cart according to claim 5, **characterized in that** the small bars (15), the front upper crosspiece (10) and the rear upper crosspiece (5) are provided with adjusting catches (19) for the ends of the rods (18).

7. The shopping cart according to any one of claims 1 to 4, **characterized in that** the upper longitudinal shaft (13) bears, on its upper face, arches (21) designed to cooperate with catching strips (23) arranged along the removable bag opening.

8. The shopping cart according to any one of claims 5 and 6, **characterized in that** the front upper crosspiece (10), the rear upper crosspiece (5) and/or the small bars (15) are configured to cooperate with hooks positioned along the removable bag opening.

9. The shopping cart according to any one of claims 5 and 6, **characterized in that** it includes at least one removable bag including, at its upper opening, catching means of the upper longitudinal shaft (13) and/or the small bars (15, 16) and the upper horizontal crosspiece (5).

10. The shopping cart according to claim 9, **characterized in that** said at least one removable bag includes, at its upper opening, two parallel rods (18), the free ends of which protrude past the bag and rest during use between catches (19) fixed on the small bars (15, 16) and the upper horizontal crosspiece (5).

11. The shopping cart according to any one of claims 1 to 6 and 8, **characterized in that** it includes at least one removable bag including, at its upper opening, catching strips (23) designed to cooperate during use with four arches (21) fixed on an upper face of the upper longitudinal shaft (13).

12. The shopping cart according to any one of claims 5 and 6, **characterized in that** it includes at least one removable bag including, at its upper opening, flat hooks designed to cooperate with the small bars (15, 16), the upper horizontal crosspiece (5) and/or the upper longitudinal shaft (13).
